# EUROPEAN PATENT SPECIFICATION

(11) **EP 3 425 231 B1**
(45) Date of publication and mention of the grant of the patent: **23.12.2020**
(21) Application number: 17760028.5
(22) Date of filing: 28.02.2017
(51) Int. Cl.: F16D 25/12

(54) **CLUTCH DETERIORATION DETECTION DEVICE AND CLUTCH DETERIORATION DETECTION METHOD**
VORRICHTUNG ZUR ERKENNUNG VON KUPPLUNGSVERSCHLEISS UND VERFAHREN ZUR ERKENNUNG VON KUPPLUNGSVERSCHLEISS
DISPOSITIF DE DÉTECTION DE DÉTÉRIORATION D'EMBRAYAGE ET PROCÉDÉ DE DÉTECTION DE DÉTÉRIORATION D'EMBRAYAGE

(30) Priority: 01.03.2016 JP 2016038792
(43) Date of publication of application: 09.01.2019
(73) Proprietor: Isuzu Motors Limited, Tokyo 140-8722 (JP)
(72) Inventor: TERASHIMA, Koji, Fujisawa-shi Kanagawa 252-0881 (JP)
(74) Representative: Miller Sturt Kenyon
(86) International application number: PCT/JP2017/007947
(87) International publication number: WO 2017/150564

(56) References cited:
- JP-A- H05 164 149
- JP-A- H09 280 348
- JP-A- 2009 202 712

## Description

### Technical Field

The present disclosure relates to a clutch deterioration detection device and a clutch deterioration detection method for detecting deterioration of a clutch.

### Background Art

Conventionally, in a vehicle such as a truck and a passenger vehicle, a clutch for connecting or disconnecting a driving force between a power source such as an engine or a motor and a drive system is provided.

In the clutch, for example, connection or disconnection is adjusted according to pressure of supplied hydraulic oil.

Deterioration of the clutch where connection or disconnection is adjusted using the hydraulic oil includes, for example, wear of a clutch plate (also referred to as a clutch disc), a hydraulic oil leak in a hydraulic chamber that supplies hydraulic oil, a hydraulic oil leak around a piston that presses the clutch plate, and an increase in friction with respect to movement of the piston.

For example, a technique of measuring pressure of the clutch piston chamber and detecting a wear amount of the clutch using the pressure is known as a technique in which a replacement time of the clutch plate can be predicted systematically to some extent and the clutch that is worn abnormally can be established (see, for example, Patent Document 1).

### Citation List

### Patent Document

Patent Document 1: JP-A-H09-280348

### Summary of the Invention

### Technical Problem

For example, according to the technique of Patent Document 1, the wear amount of the clutch can be detected by measuring the pressure of the clutch piston chamber. However, it is necessary to provide a pressure sensor for measuring the pressure of the clutch piston chamber, and it is difficult to adopt the pressure sensor from a cost aspect. In addition, in the clutch, various types of deterioration may also occur in addition to wear of the clutch plate, and it is required that even such deterioration can be appropriately detected.

Here, an object of the present disclosure is to provide a technique capable of easily and appropriately detecting deterioration of a clutch.

### Solution to Problem

In accordance with a first aspect of the present invention there is provided a clutch deterioration detection device as defined in claim 1.

In the clutch deterioration detection device, the output shaft is connected to a transmission, and the hydraulic oil supply control portion may supply the hydraulic oil in a neutral state of the transmission.

In the clutch deterioration detection device, the clutch may be a wet clutch.

Further, in the clutch deterioration detection device, the predetermined hydraulic oil pressure may be a hydraulic oil pressure required for bringing into a state immediately before the clutch is in contact.

In the clutch deterioration detection device, the predetermined rotation speed may be lower than the rotation speed of the input shaft.

The clutch deterioration detection device may further include a warning processing portion that outputs a warning indicating that the clutch deteriorates in a case where the clutch deterioration determination portion determines that the clutch deteriorates.

In accordance with a second aspect of the present invention there is provided a clutch deterioration detection method as defined in claim 7.

### Advantageous Effects of the Invention

According to the present disclosure, deterioration of the clutch can be easily and appropriately detected.

### Brief Description of the Drawings

Fig. 1 is a schematic configuration diagram showing a dual-clutch transmission including a dual-clutch device according to an embodiment.
Fig. 2 is a flowchart of deterioration determination processing according to an embodiment.
Fig. 3A is a timing chart showing an example of change of pressure in a hydraulic chamber according to an embodiment. Fig. 3B is a timing chart showing an example of change of rotation speed of a clutch output shaft according to an embodiment.

### Description of Embodiments

Hereinafter, a dual-clutch transmission including a transmission control device as an example of a clutch deterioration detection device according to an embodiment of the present disclosure will be described based on the accompanying drawings. The same reference numeral is attached to the same component, and the name and function thereof are also the same. Therefore, detailed description thereof will not be repeated.

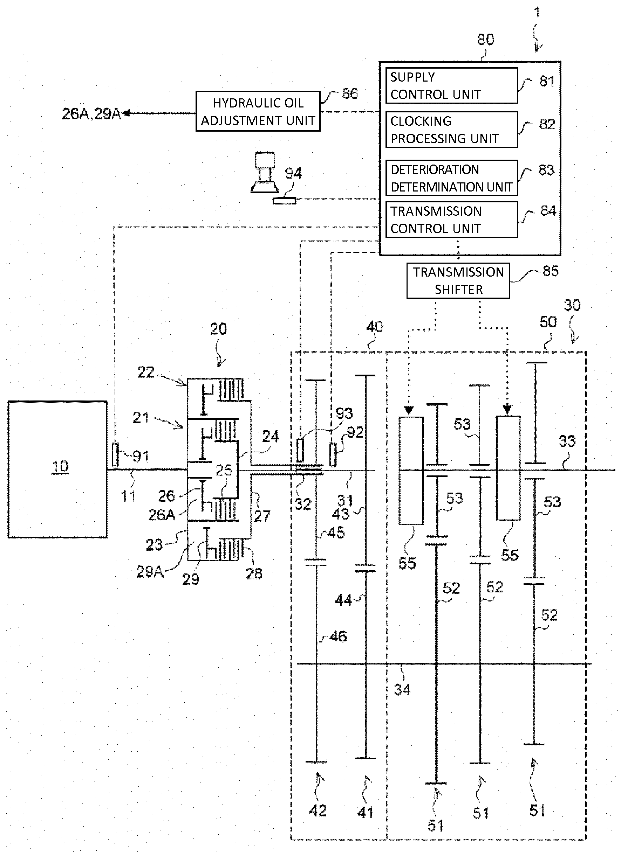

Fig. 1 is a schematic configuration diagram showing a dual-clutch transmission including a dual-clutch device according to an embodiment.

The dual-clutch transmission 1 is connected to an output shaft 11 of an engine 10, which is an example of a power source.

The dual-clutch transmission 1 includes a dual-clutch device 20 having first and second clutches 21, 22, a transmission mechanism 30, a transmission device 80 as an example of a clutch deterioration detection device, a transmission shifter 85, a hydraulic oil adjustment unit 86, an engine rotation speed gear change91, a first input shaft rotation speed sensor 92, a second input shaft rotation speed sensor 93, and a shift position sensor 94.

The first clutch 21 is, for example, a wet multi-plate clutch, and includes a clutch hub 23 that rotates integrally with the output shaft (corresponding to the input shaft of the first clutch 21 and the second clutch 22) 11 of the engine 10, a first clutch drum 24 that rotates integrally with the first input shaft (corresponding to the output shaft of the first clutch 21) 31 of the transmission mechanism 30, a first piston 26 that pressure-welds a first clutch plate 25, and a first hydraulic chamber 26A as an example of a hydraulic chamber.

In the first clutch 21, when the first piston 26 moves by a stroke toward an output side (the right in Fig. 1) by hydraulic oil pressure supplied to the first hydraulic chamber 26A, the first clutch plate 25 is pressure-welded and brought into a connection state of transmitting torque. On the other hand, when the hydraulic oil pressure in the first hydraulic chamber 26A is released, the first piston 26 is moved by a stroke to an input side (the left in Fig. 1) by a biasing force of a spring (not illustrated), and the first clutch 21 is in a cutting state (disconnection state) of cutting off power transmission. Since the first clutch 21 of the present embodiment is a wet clutch, even in a state where the clutches are not in contact (a state where the first clutch plates are not in contact with each other), the torque acting to rotate the first clutch plate 25 on the output side is transmitted through the surrounding hydraulic oil when the first clutch plate 25 on the input side rotates.

The second clutch 22 is, for example, a wet multi-plate clutch, and includes a clutch hub 23, a second clutch drum 27 that rotates integrally with a second input shaft (corresponding to the output shaft of the second clutch 22) 32 of the speed change mechanism 30, a plurality of second clutch plates 28, a second piston 29 that is in pressure contact with the second clutch plates 28, and a second hydraulic chamber 29A as an example of hydraulic chamber.

In the second clutch 22, when the second piston 29 moves by a stroke toward an output side (the right in Fig. 1) by hydraulic oil pressure supplied to the second hydraulic chamber 29A, the second clutch plate 28 is pressure-welded and brought into a connection state of transmitting torque. On the other hand, when the hydraulic oil pressure is released, the second piston 29 is moved by a stroke to an input side (the left in Fig. 1) by a biasing force of a spring (not illustrated), and the second clutch 22 is in a cutting state of cutting off torque transmission. Since the second clutch 22 of the present embodiment is a wet clutch, even in a state where the clutches are not in contact, the torque acting to rotate the second clutch plate 26 on the output side is transmitted through the surrounding hydraulic oil when the second clutch plate 26 on the input side rotates.

The transmission mechanism 30 is configured to include an auxiliary transmission unit 40 disposed on the input side and a main transmission unit 50 disposed on the output side. In addition, the transmission mechanism 30 includes a first input shaft 31 and a second input shaft 32 provided in the auxiliary transmission unit 40, an output shaft 33 provided in the main transmission unit 50, and an auxiliary shaft 34 disposed parallel to the shafts 31 to 33. The first input shaft 31 is relatively rotatably inserted into a hollow shaft penetrating the second input shaft 32 in an axial direction thereof. A propeller shaft coupled to a vehicle drive wheel (nothing illustrated) via a differential device or the like is connected to an output end of the output shaft 33.

The auxiliary transmission unit 40 is provided with a first splitter gear pair 41 and a second splitter gear pair 42. The first splitter gear pair 41 includes a first input main gear 43 fixed to the first input shaft 31, and a first input auxiliary gear 44 fixed to the auxiliary shaft 34 and usually meshing with the first input main gear 43. The second splitter gear pair 42 includes a second input main gear 45 fixed to the second input shaft 32, and a second input auxiliary gear 46 fixed to the auxiliary shaft 34 and usually meshing with the second input main gear 45.

The main transmission unit 50 is provided with a plurality of output gear pairs 51 and a plurality of synchronization mechanisms 55. The output gear pair 51 includes an output auxiliary gear 52 fixed to the auxiliary shaft 34, and an output main gear 53 provided rotatably relatively to the output shaft 33 and usually meshing with the output auxiliary gear 52. The synchronization mechanism 55 has a well-known structure and includes a dog clutch or the like (nothing illustrated). Operation of the synchronization mechanism 55 is controlled by the transmission control device 80, and switches the output shaft 33 and the output main gear 53 selectively to an engaged state (gear in) or a disengaged state (neutral state) according to the current shift position detected by a shift position sensor 94, an accelerator opening detected by an accelerator opening sensor (not illustrated), a speed detected by a vehicle speed sensor, and the like. The number, arrangement pattern, or the like of the output gear pairs 51 and the synchronization mechanisms 55 are not limited to the illustrated example, and can appropriately change in a scope without departing from the spirit of the present disclosure.

The transmission shifter 85 moves a sleeve of the synchronization mechanism 55 in accordance with instructions of the transmission control device 80 to switch the output shaft 33 and the output main gear 53 selectively to the engaged state (gear in) or the disengaged state (neutral state).

The hydraulic oil adjustment unit 86 includes, for example, a linear solenoid valve, and adjusts an amount and pressure of the hydraulic oil to be supplied to the first hydraulic chamber 26A and an amount and pressure of the hydraulic oil to be supplied to the second hydraulic chamber 29A from an oil pressure supply source (not illustrated) in accordance with control signals (control current) supplied from the transmission control device 83.

The engine rotation speed sensor 91 detects a rotation speed (engine rotation speed) of the engine 10 and outputs the rotation speed to the transmission control device 80. The rotation speed of the engine 10 corresponds to the rotation speed of the input shaft of the dual-clutch device 20. The first input shaft rotation speed sensor 92 detects a rotation speed of the first input shaft 31 and outputs the rotation speed to the transmission control device 80. The rotation speed of the first input shaft 31 corresponds to the rotation speed of the output shaft of the first clutch 21. The second input shaft rotation speed sensor 93 detects a rotation speed of the second input shaft 32 and outputs the rotation speed to the transmission control device 80. The rotation speed of the second input shaft 32 corresponds to the rotation speed of the output shaft of the second clutch 22. The shift position sensor 94 detects a position (shift position) designated (selected) by an operation lever, and outputs the position to the transmission control device 80. In the operation lever, for example, a P (parking) range to be used during parking of a vehicle, an N (neutral) range selected when the transmission mechanism 30 is set to neutral, a D (drive) range selected when performing automatic transmission, an M (manual) range selected when performing transmission by a driver's operation, a plus (+) for specifying a shift up in the M range, a minus (-) for specifying a shift down in the M range, and the like can be selected.

The transmission control device 80 performs various types of control on the engine 10, the dual-clutch device 20, the transmission mechanism 30, and the like, and includes a well-known CPU, a memory such as a ROM or a RAM, an input port, an output port, and the like. A program is memorized in the memory, and the transmission control device 80 may execute various types of control since the CPU executes the program. To perform the various types of control, sensor values of various sensors (91 to 94) are input to the control device 80.

The transmission control device 80 includes a supply control unit 81 as an example of a hydraulic oil supply control portion, a clocking processing unit 82 as an example of a clocking portion and an elapsed time determination portion, a deterioration determination unit 83 as an example of a clutch deterioration determination portion and a warning processing portion, and a transmission control unit 84 as some functional elements. Although these functional elements are described as functional elements included in the transmission control device 80 which is an integrated hardware in the present embodiment, any one of these can also be provided in a separate hardware. The supply control unit 81, the clocking processing unit 82, the deterioration determination unit 83, and the transmission control unit 84 may be implemented by a program memorized in the memory.

When deterioration determination processing is executed, the supply control unit 81 outputs a control signal for controlling the hydraulic oil adjustment unit 86 such that oil pressure in the hydraulic chambers (26A, 29A) of the clutches (21, 22) to be determined becomes a predetermined oil pressure for performing the deterioration determination processing. In the present embodiment, the predetermined oil pressure for performing the deterioration determination processing is the oil pressure (standby oil pressure) immediately before the clutch to be determined is in contact. If such standby oil pressure is set, since a state in which the clutch is in contact can be reduced, it is possible to appropriately prevent the clutch from being in contact and the rotation speed of the output shaft of the clutch from rising suddenly, and it is possible to maintain high accuracy in determination using the rotation speed of the output shaft of the clutch.

The clocking processing unit 82 starts clocking from a time when the hydraulic oil adjustment unit 86 starts supply of the hydraulic oil to the hydraulic chambers (26A, 29A). The clocking processing unit 82 determines whether the rotation speed of the output shaft of the clutch to be processed exceeds a predetermined rotation speed based on the sensor values from the input shaft rotation speed sensors (92, 93). Here, the predetermined rotation speed may be, for example, a rotation speed lower than an idling speed of the engine 10. By setting the rotation speed lower than the idling rotation speed, time required for deterioration determination processing can be shortened. When it is determined that the rotation speed of the output shaft of the clutch exceeds the predetermined rotation speed, the clocking processing unit 82 ends clocking of the elapsed time since the hydraulic oil adjustment unit 86 starts supply of the hydraulic oil to the hydraulic chamber.

The deterioration determination unit 83 determines whether the elapsed time clocked by the clocking processing unit 82 from the start of supply of the hydraulic oil to the hydraulic chamber until the rotation speed of the output shaft of the clutch exceeds the predetermined rotation speed exceeds a predetermined allowed time. When it is determined that the elapsed time exceeds the allowed time, the deterioration determination unit 83 determines that the clutch deteriorates, and when it is determined that the elapsed time does not exceed the allowed time, the deterioration determination unit 83 determines that the clutch does not deteriorate. Here, the allowed time is time allowed as elapsed time until the rotation speed of the output shaft of the clutch reaches a predetermined rotation speed when the clutch does not deteriorate, and the allowed time can be grasped by, for example, an experiment or the like using the dual-clutch device 20 having the same or identical configuration.

When it is determined that the clutch deteriorates, the deterioration determination unit 83 memorizes deterioration of the clutch in the memory (not illustrated) of the transmission control device 80, and outputs the deterioration to a meter unit (not illustrated) that indicates, for example, meters provided at a driver seat. Accordingly, the driver can appropriately grasp that the clutch deteriorates.

The transmission control unit 84 specifies an appropriate shift stage, controls the transmission shifter 85, and sets the transmission mechanism 30 to an appropriate shift stage in accordance with the current shift position detected by the shift position sensor 94, the accelerator opening detected by the accelerator opening sensor, the speed detected by the vehicle speed sensor, and the like.

When the shift position is set in a neutral range, the transmission control unit 84 controls the transmission shifter 85 such that the transmission mechanism 30 is in a neutral state, that is, a state in which a driving force is not transmitted between the input shaft (31, 32) and the output shaft 33.

Next, deterioration determination processing that determines whether the clutches (21, 22) of the dual-clutch device 20 deteriorate will be described.

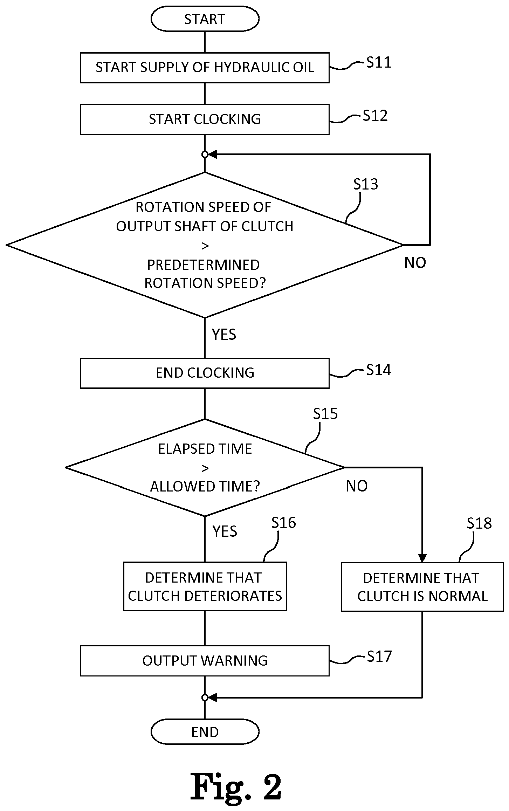

Fig. 2 is a flowchart of deterioration determination processing according to an embodiment.

For example, when the shift position detected by the shift position sensor 94 is the neutral range, the deterioration determination processing is executed on one clutch (the first clutch 21 or the second clutch 22) of the dual-clutch device 20. In a case where two clutches of the dual-clutch device 20 are targeted, the deterioration determination processing may be repeatedly executed with each clutch as a processing target. The deterioration determination processing may be executed each time when the vehicle is started, may be executed once each time of a plurality of times of starting, and may be executed at the time of starting after a predetermined period has elapsed after executing the deterioration determination processing.

In the present embodiment, the rotation speed of the engine 10 will be described below as a rotation speed controlled so as to be maintained at a constant rotation speed (for example, idling rotation speed) in the execution of the deterioration determination processing.

The supply control unit 81 supplies a control signal for setting the hydraulic chamber (26A or 29A) of the clutch to be processed (first clutch 21 or second clutch 22) at the standby oil pressure to the hydraulic oil adjustment unit 86, starts supply of the hydraulic oil to the hydraulic chamber by the hydraulic oil adjustment unit 86 (step S11), and the clocking processing unit 82 starts clocking from a time when the hydraulic oil adjustment unit 86 starts supply of the hydraulic oil to the hydraulic chamber (step S12).

Next, the clocking processing unit 82 determines whether the rotation speed of the output shaft of the clutch to be processed exceeds a predetermined rotation speed based on the sensor values from the input shaft rotation speed sensors (92, 93) (step S13). As a result, when it is determined that the rotation speed of the output shaft of the clutch does not exceed the predetermined rotation speed (step S13: NO), the clocking processing unit 82 executes processing of step S13 again.

On the other hand, when it is determined that the rotation speed of the output shaft of the clutch exceeds the predetermined rotation speed (step S13: YES), the clocking processing unit 82 ends clocking of the elapsed time since the hydraulic oil adjustment unit 86 starts supply of the hydraulic oil to the hydraulic chamber (step S14).

Next, the deterioration determination unit 83 determines whether the elapsed time clocked by the clocking processing unit 82 from the start of supply of the hydraulic oil to the hydraulic chamber until the rotation speed of the output shaft of the clutch exceeds the predetermined rotation speed exceeds a predetermined allowed time (step S15).

As a result, when it is determined that the elapsed time exceeds the allowed time (step S15: YES), the deterioration determination unit 83 determines that the clutch deteriorates (step S16), memorizes deterioration of the clutch in the memory (not illustrated) of the transmission control device 80, outputs a warning indicating the deterioration to a meter unit (not illustrated) that indicates, for example, meters provided at a driver seat (step S17), and ends the processing.

On the other hand, when it is determined that the elapsed time does not exceed the allowed time (step S15: NO), the deterioration determination unit 83 determines that the clutch does not deteriorate, that is, the clutch is determined to be normal (step S18), and ends the processing.

Next, a change in pressure in the hydraulic chamber of the clutch and a change in the rotation speed of the output shaft of the clutch will be described.

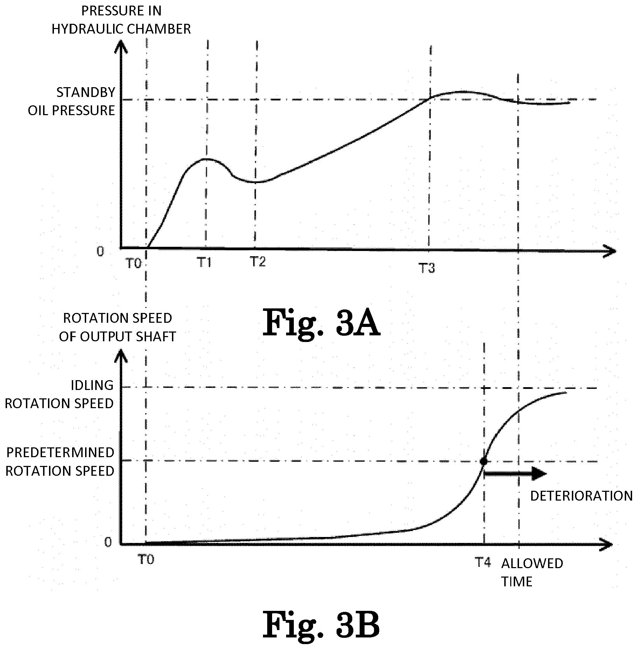

Fig. 3A is a timing chart showing an example of change of pressure in a hydraulic chamber according to an embodiment. Fig. 3B is a timing chart showing an example of change of rotation speed of a clutch output shaft according to an embodiment.

First, a change in pressure in the hydraulic chamber will be described. At time T0 shown in Fig. 3A, when the hydraulic oil adjustment unit 86 receives a control signal for setting the hydraulic chamber (26 A or 29A) of the clutch (the first clutch 21 or the second clutch 22) at the standby oil pressure from the supply control device 81, the hydraulic oil adjustment unit 86 starts supply of the hydraulic oil to the hydraulic chamber.

When supply of the hydraulic oil to the hydraulic chamber is started by the hydraulic oil adjustment unit 86, hydraulic oil accumulates in the hydraulic chamber, and the hydraulic oil pressure in a hydraulic oil chamber increases accordingly. Thereafter, at time T1, when the hydraulic oil pressure reaches pressure that can move the piston (26 or 29) of the clutch, the piston starts moving to the output side, and the oil pressure temporarily decreases since the hydraulic chamber expands as the piston moves. At time T2, the piston continues to move, but the oil pressure gradually increases. Thereafter, at time T3, the oil pressure reaches the standby oil pressure, and then the oil pressure in the hydraulic oil chamber is controlled to be maintained at the standby oil pressure by the hydraulic oil adjustment unit 86.

Here, a relationship between the clutch deterioration and the time T1, T2, and T3 will be described. In the clutch, when wear of the clutch plate increases, a driving amount for driving the piston when the clutch plate is moved to a position immediately before the clutch is in contact increases, and the amount of hydraulic oil which should be supplied to the hydraulic oil chamber increases. Therefore, time until the time T3 which reaches the standby oil pressure is prolonged. In addition, when a leak of the hydraulic oil occurs in the hydraulic chamber or a leak of the hydraulic oil occurs around the piston, since it is necessary to supply the hydraulic oil amount that supplements the hydraulic oil amount leaking to the outside, time until the time T1, T2, and T3 is prolonged. On the other hand, when an increase in friction with respect to movement of the piston occurs, time until the time T3 for a rise of the pressure in the hydraulic chamber may be reduced while the piston does not move. However, in this case, even when the oil pressure in the hydraulic chamber is the standby oil pressure, a movement amount of the piston is insufficient, and a state immediately before the clutch is in contact is not achieved.

Next, a change in the rotation speed of the clutch output shaft (the first input shaft 31 or the second input shaft 32 of the transmission mechanism 30) will be described. At time T0, when supply of the hydraulic oil to the hydraulic chamber is started, the rotation speed of the clutch output shaft gradually increases as shown in Fig. 3B under the influence of the torque transmitted through the hydraulic oil between the clutch plates. Here, as the piston moves, since the torque transmitted from the clutch plate on the input shaft side to the clutch plate on the output shaft side via the hydraulic oil becomes larger as the gap between the clutch plates on the input side and the output side becomes narrower, an increase in the rotation speed of the output shaft steepens as the clutch plate approaches to contact. As a result, for example, at the time T4 after the time T3 at which the standby oil pressure is reached, the rotation speed of the output shaft reaches an allowed rotation speed.

Here, a relationship between deterioration of the clutch and the time T4 will be described. In the clutch, when the wear of the clutch plate increases, a driving amount for driving the piston increases when the clutch plate is moved to a position immediately before the clutch is in contact, and a required amount of hydraulic oil increases. Therefore, as the wear of the clutch plate becomes larger, the time until a distance between the clutch plates becomes narrower is prolonged, and the time until the time T4 at which the rotation speed of the output shaft becomes the allowed rotation speed is longer. In addition, when a leak of hydraulic oil occurs in the hydraulic chamber or a leak of hydraulic oil occurs around the piston, since it is necessary to supply the amount of hydraulic oil for supplementing the amount of hydraulic fluid leaking to the outside, the required amount of hydraulic oil increases when the clutch plate is moved to a position immediately before contact. Therefore, the time until the distance between the clutch plates is narrowed is prolonged, and the time until the time T4 at which the rotation speed of the output shaft reaches the allowed rotation speed becomes long.

In this way, regarding the above phenomena of deterioration of the clutch, when viewing the elapsed time until the rotation speed of the output shaft of the clutch reaches the allowed rotation speed, it is understood that influence to prolong the elapsed time as the clutch deteriorates. Therefore, it is understood that the deterioration of the clutch can be appropriately determined by comparing the elapsed time with a predetermined allowed time.

As described above, according to the transmission control device 80 according to the present embodiment, the hydraulic oil is supplied such that the hydraulic chambers (26A, 29A) of the clutch are at the predetermined hydraulic oil pressure in a state of keeping the rotation speed of the clutches (21, 22) on the input shaft side constant, the elapsed time until the rotation speed of the output shaft of the clutch reaches the predetermined rotation speed is measured after the supply of the hydraulic oil to the hydraulic chamber of the clutch is started, and whether the elapsed time exceeds the predetermined allowed time or not is determined, if the elapsed time exceeds the allowed time, since it is determined that the clutch of the dual-clutch device 20 deteriorates, it is possible to easily and appropriately determine the deterioration of the clutch without providing a relatively expensive pressure sensor that detects pressure in the hydraulic chamber.

The present invention is not limited to the above-described embodiment, and can be appropriately modified and implemented in a scope without departing from the scope of the claims.

For example, while the engine 10 is used and described as the power source in the above embodiment, the present invention is not limited thereto, and the power source may be an electric motor or a hydraulic motor.

In the above embodiment, the oil pressure in the hydraulic chamber is controlled to be the standby oil pressure, meanwhile the time until the output side rotation speed of the clutches 21, 22 reaches a predetermined rotation speed is measured, although the deterioration of the clutches 21, 22 is determined, the present invention is not limited thereto, for example, the oil pressure may be controlled to be equal to or higher than the standby oil pressure at which the clutches 21, 22 are in contact, and may be controlled to be equal to or lower than the standby oil pressure, in short, may be controlled to any oil pressure as long as the oil pressure can raise the output side rotation speed of the clutches 21, 22.

Although the deterioration determination processing is executed when the shift position is in the neutral range in the above embodiment, the present invention is not limited thereto, and if the vehicle stops, the shift position may be executed when the vehicle is at another position such as a drive range. However, when the deterioration determination processing is executed, the transmission mechanism 30 of the dual-clutch transmission 1 needs to be neutral, that is, in a state in which the driving force is not transmitted between the input shafts 31, 32 and the output shaft 33 of the transmission mechanism 30.

Although deterioration of a wet clutch is determined in the above embodiment, the present invention is not limited thereto, and deterioration of a dry clutch may be determined. When the clutch is a dry clutch, the clutch plate on the output side does not rotate unless the clutch is in contact, so that the oil pressure in the hydraulic chamber needs to be controlled to be equal to or higher than pressure that the clutch is in contact.

In the above embodiment, an example of the transmission includes the dual-clutch transmission 1 including an auxiliary transmission unit 40, but the present invention is not limited thereto, and the transmission may include a clutch device having only one clutch.

The present application is based on Japanese Patent Application (No. 2016-038792) filed on March 1, 2016.

### Industrial Applicability

According to the technique of the present disclosure, it is useful in that deterioration of the clutch can be detected easily and appropriately.

### List of Reference Numerals

- 1: dual-clutch transmission
- 10: engine
- 11: output shaft
- 20: dual-clutch device
- 21: first clutch
- 22: second clutch
- 26A: first hydraulic chamber
- 29A: second hydraulic chamber
- 30: transmission mechanism
- 40: auxiliary transmission unit
- 50: main transmission unit
- 80: transmission control device
- 81: supply control unit
- 82: clocking processing unit
- 83: deterioration determination unit
- 84: transmission control unit
- 85: transmission shifter
- 86: hydraulic oil adjustment unit
- 91: engine rotation speed sensor
- 92: first input shaft rotation speed sensor
- 93: second input shaft rotation speed sensor
- 94: shift position sensor

## Claims

1. A clutch deterioration detection device that detects whether a clutch device (20) including an input shaft (31), an output shaft (11) and a hydraulic chamber (26A, 29A), and being able to adjust a connection or disconnection state between the input shaft (31) and the output shaft (11) by a pressure of hydraulic oil supplied to the hydraulic chamber (26A, 29A) deteriorates or not, comprising:
a hydraulic oil supply control portion that supplies the hydraulic oil such that the hydraulic chamber (26A, 29A) has a predetermined hydraulic oil pressure in a state of keeping a rotation speed of the input shaft (31) constant;
**characterised by**:
a clocking portion that measures elapsed time since the hydraulic oil supply control portion starts a supply of the hydraulic oil to the hydraulic chamber (26A, 29A) of the clutch device (20) until a rotation speed of the output shaft (11) of the clutch device (20) reaches a predetermined rotation speed;
an elapsed time determination portion that determines whether the elapsed time exceeds a predetermined allowed time or not; and
a clutch deterioration determination portion that determines that the clutch device (20) deteriorates in a case where the elapsed time exceeds the allowed time.

2. The clutch deterioration detection device according to claim 1,
wherein the output shaft (11) is connected to a transmission, and
the hydraulic oil supply control portion supplies the hydraulic oil in a neutral state of the transmission.

3. The clutch deterioration detection device according to claim 1 or 2,
wherein the clutch device (20) is a wet clutch device.

4. The clutch deterioration detection device according to claim 3,
wherein the predetermined hydraulic oil pressure is a hydraulic oil pressure required for bringing into a state immediately before the clutch device (20) is in contact.

5. The clutch deterioration detection device according to any one of claims 1 to 4,
wherein the predetermined rotation speed is lower than the rotation speed of the input shaft (31).

6. The clutch deterioration detection device according to any one of claims 1 to 5, further comprising:
a warning processing portion that outputs a warning indicating that the clutch deteriorates in a case where the clutch deterioration determination portion determines that the clutch device (20) deteriorates.

7. A clutch deterioration detection method of detecting whether a clutch device (20) including an input shaft (31), an output shaft (11) and a hydraulic chamber (26A, 29A), and being able to adjust a connection or disconnection state between the input shaft (31) and the output shaft (11) by a pressure of hydraulic oil supplied to the hydraulic chamber (26A, 29A) deteriorates or not, comprising:
a hydraulic oil supply control step of supplying the hydraulic oil such that the hydraulic chamber (26A, 29A) has a predetermined hydraulic oil pressure in a state of keeping a rotation speed of the input shaft (31) constant;
**characterised by**:
a clocking step of measuring elapsed time since the hydraulic oil supply control step starts to supply the hydraulic oil to the hydraulic chamber (26A, 29A) of the clutch device (20) until a rotation speed of the output shaft (11) of the clutch device (20) reaches a predetermined rotation speed;
an elapsed time determination step of determining whether the elapsed time exceeds a predetermined allowed time or not; and
a clutch deterioration determination step of determining that the clutch device (20) deteriorates in a case where the elapsed time exceeds the allowed time.

## Patentansprüche

1. Vorrichtung zur Erkennung von Kupplungsverschleiß, die erfasst, ob eine Kupplungsvorrichtung (20), die eine Eingangswelle (31), eine Ausgangswelle (11) und eine Hydraulikkammer (26A, 29A) umfasst, und die in der Lage ist, einen Verbindungs- oder einen Trennzustand zwischen der Eingangswelle (31) und der Ausgangswelle (11) durch einen Druck des Hydrauliköls einzustellen, das der Hydraulikkammer (26A, 29A) zugeführt wurde, verschleißt oder nicht, umfassend:
einen Hydrauliköl-Zuführungssteuerabschnitt, der das Hydrauliköl derart zuführt, dass die Hydraulikkammer (26A, 29A) in einem Zustand, in dem eine Drehzahl der Eingangswelle (31) konstant gehalten wird, einen vorbestimmten Hydrauliköldruck aufweist;
**gekennzeichnet durch**:
einen Taktgeberabschnitt, der die verstrichene Zeit misst, seit der Hydrauliköl-Zuführungssteuerabschnitt eine Zufuhr des Hydrauliköls zu der Hydraulikkammer (26A, 29A) der Kupplungsvorrichtung (20) gestartet hat, bis eine Drehzahl der Ausgangswelle (11) der Kupplungsvorrichtung (20) eine vorbestimmte Drehzahl erreicht;
einen Abschnitt zur Bestimmung der verstrichenen Zeit, der bestimmt, ob die verstrichene Zeit eine vorbestimmte zulässige Zeit überschreitet oder nicht; und
einen Abschnitt zur Bestimmung des Kupplungsverschleißes, der bestimmt, dass die Kupplungsvorrichtung (20) in einem Fall verschleißt, in dem die verstrichene Zeit die zulässige Zeit überschreitet.

2. Vorrichtung zur Erkennung von Kupplungsverschleiß nach Anspruch 1,
wobei die Ausgangswelle (11) mit einem Getriebe verbunden ist, und
der Hydrauliköl-Zuführungssteuerabschnitt das Hydrauliköl in einem neutralen Zustand des Getriebes zuführt.

3. Vorrichtung zur Erkennung von Kupplungsverschleiß nach Anspruch 1 oder 2,
wobei die Kupplungsvorrichtung (20) eine Nasskupplungsvorrichtung ist.

4. Vorrichtung zur Erkennung von Kupplungsverschleiß nach Anspruch 3,
wobei der vorbestimmte Hydrauliköldruck ein Hydrauliköldruck ist, der erforderlich ist, um in einen Zustand unmittelbar vor dem Kontakt der Kupplungsvorrichtung (20) gebracht zu werden.

5. Vorrichtung zur Erkennung von Kupplungsverschleiß nach einem der Ansprüche 1 bis 4,
wobei die vorbestimmte Drehzahl niedriger ist als die Drehzahl der Eingangswelle (31).

6. Vorrichtung zur Erkennung von Kupplungsverschleiß nach einem der Ansprüche 1 bis 5, ferner umfassend:
einen Warnungs-Verarbeitungsabschnitt, der eine Warnung ausgibt, die anzeigt, dass die Kupplung in einem Fall verschleißt, in dem der Abschnitt zur Bestimmung des Kupplungsverschleißes feststellt, dass die Kupplungsvorrichtung (20) verschleißt.

7. Verfahren zur Erkennung von Kupplungsverschleiß, das erkennt, ob eine Kupplungsvorrichtung (20), die eine Eingangswelle (31), eine Ausgangswelle (11) und eine Hydraulikkammer (26A, 29A) umfasst, und die in der Lage ist, einen Verbindungs- oder einen Trennzustand zwischen der Eingangswelle (31) und der Ausgangswelle (11) durch einen Druck des Hydrauliköls einzustellen, das der Hydraulikkammer (26A, 29A) zugeführt wurde, verschleißt oder nicht, umfassend:
einen Hydrauliköl-Zuführungssteuerschritt zum Zuführen des Hydrauliköls derart, dass die Hydraulikkammer (26A, 29A) in einem Zustand, in dem eine Drehzahl der Eingangswelle (31) konstant gehalten wird, einen vorbestimmten Hydrauliköldruck aufweist;
**gekennzeichnet durch**:
einen Taktgeberschritt zum Messen der verstrichenen Zeit, seit der Hydrauliköl-Zuführungssteuerschritt eine Zufuhr des Hydrauliköls zu der Hydraulikkammer (26A, 29A) der Kupplungsvorrichtung (20) gestartet hat, bis eine Drehzahl der Ausgangswelle (11) der Kupplungsvorrichtung (20) eine vorbestimmte Drehzahl erreicht;
einen Schritt zur Bestimmung der verstrichenen Zeit, der bestimmt, ob die verstrichene Zeit eine vorbestimmte zulässige Zeit überschreitet oder nicht; und
einen Schritt zur Bestimmung des Kupplungsverschleißes, der bestimmt, dass die Kupplungsvorrichtung (20) in einem Fall verschleißt, in dem die verstrichene Zeit die zulässige Zeit überschreitet.

## Revendications

1. Dispositif de détection de détérioration d'embrayage qui détecte si un dispositif d'embrayage (20) comprenant un arbre d'entrée (31), un arbre de sortie (11) et une chambre hydraulique (26A, 29A), et étant capable d'ajuster un état de connexion ou de déconnexion entre l'arbre d'entrée (31) et l'arbre de sortie (11) par une pression d'huile hydraulique approvisionnée à la chambre hydraulique (26A, 29A) se détériore ou pas, comprenant :
une section de commande d'approvisionnement d'huile hydraulique qui approvisionne l'huile hydraulique de telle manière que la chambre hydraulique (26A, 29A) a une pression d'huile hydraulique prédéterminée dans un état de maintien d'une vitesse de rotation de l'arbre d'entrée (31) constante ;
**caractérisé par** :
une section de chronomètrage qui mesure le temps écoulé depuis que la section de commande d'approvisionnement d'huile hydraulique débute un approvisionnement de l'huile hydraulique à la chambre hydraulique (26A, 29A) du dispositif d'embrayage (20) jusqu'à ce qu'une vitesse de rotation de l'arbre de sortie (11) du dispositif d'embrayage (20) atteigne une vitesse de rotation prédéterminée ;
une section de détermination de temps écoulé qui détermine si le temps écoulé dépasse un temps permis prédéterminé ou pas ; et
une section de détermination de détérioration d'embrayage qui détermine que le dispositif d'embrayage (20) se détériore dans un cas où le temps écoulé dépasse le temps permis.

2. Dispositif de détection de détérioration d'embrayage selon la revendication 1,
dans lequel l'arbre de sortie (11) est connecté à une transmission, et
la section de commande d'approvisionnement d'huile hydraulique approvisionne l'huile hydraulique dans un état neutre de la transmission.

3. Dispositif de détection de détérioration d'embrayage selon la revendication 1 ou 2,
dans lequel le dispositif d'embrayage (20) est un dispositif d'embrayage humide.

4. Dispositif de détection de détérioration d'embrayage selon la revendication 3,
dans lequel la pression d'huile hydraulique prédéterminée est une pression d'huile hydraulique requise pour mettre dans un état immédiatement avant que le dispositif d'embrayage (20) soit en contact.

5. Dispositif de détection de détérioration d'embrayage selon l'une quelconque des revendications 1 à 4,
dans lequel la vitesse de rotation prédéterminée est plus faible que la vitesse de rotation de l'arbre d'entrée (31).

6. Dispositif de détection de détérioration d'embrayage selon l'une quelconque des revendications 1 à 5, comprenant en outre :
une section de traitement d'avertissement qui sort un avertissement indiquant que le dispositif se détériore dans un cas où la section de détermination de détérioration d'embrayage détermine que le dispositif d'embrayage (20) se détériore.

7. Procédé de détection de détérioration d'embrayage pour détecter si un dispositif d'embrayage (20) comprenant un arbre d'entrée (31), un arbre de sortie (11) et une chambre hydraulique (26A, 29A), et étant capable d'ajuster un état de connexion ou de déconnexion entre l'arbre d'entrée (31) et l'arbre de sortie (11) par une pression d'huile hydraulique approvisionnée à la chambre hydraulique (26A, 29A) se détériore ou pas, comprenant :
une étape de commande d'approvisionnement d'huile hydraulique d'approvisionnement de l'huile hydraulique de telle manière que la chambre hydraulique (26A, 29A) a une pression hydraulique prédéterminée dans un état de maintien d'une vitesse de rotation de l'arbre d'entrée (31) constante ;
une étape de chronométrage de mesure du temps écoulé depuis qu'une étape de commande d'approvisionnement d'huile hydraulique commence à approvisionner l'huile hydraulique à la chambre d'huile hydraulique (26A, 29A) du dispositif d'embrayage (20) jusqu'à ce qu'une vitesse de rotation de l'arbre de sortie (11) du dispositif d'embrayage (20) atteigne une vitesse de rotation prédéterminée ;
une étape de détermination de temps écoulé pour déterminer si le temps écoulé dépasse un temps permis prédéterminé ou pas ; et
une étape dé détermination de détérioration d'embrayage de détermination que le dispositif d'embrayage (20) se détériore dans un cas où le temps écoulé dépasse le temps permis.
